Europäisches Patentamt

European Patent Office

Office européen des brevets

(11) Publication number: **0 119 690**
A1

## (12) EUROPEAN PATENT APPLICATION

(21) Application number: **84300431.8**

(22) Date of filing: **25.01.84**

(51) Int. Cl.³: **B 61 H 5/00,** B 61 H 15/00, B 61 C 9/50

(30) Priority: **10.02.83 GB 8303755**

(43) Date of publication of application: **26.09.84**
**Bulletin 84/39**

(84) Designated Contracting States: **DE FR**

(71) Applicant: **LUCAS INDUSTRIES public limited company, Great King Street, Birmingham, B19 2XF (GB)**

(72) Inventor: **Mortimer, William Alan, 35 Lightwoods Hill Bearwood, Warley West Midlands B67 5DZ (GB)**
Inventor: **Adamson, John, "Melwood" 16 Oldfield Way, Heswall Merseyside (GB)**
Inventor: **Tickle, Colin John Frederick, "April House" 15 Stonewails, Burton Rossett Clwyd, LL12 0LG Wales (GB)**

(74) Representative: **Spall, Christopher John et al, BARKER, BRETTELL & DUNCAN 138 Hagley Road, Edgbaston Birmingham B16 9PW (GB)**

(54) Disc brakes for rail vehicles.

(57) In a disc brake for a rail vehicle a pair of friction members (29) for engagement with opposite faces of a rotatable disc (25) are carried by the inner ends of a pair of caliper levers (27, 28) which are adapted to be separated at their outer ends by a fixed actuator (32). A return spring (40) acts between the levers (27, 28) to hold each lever against its own actuator output member (33, 34) and this maintains substantially constant braking clearances on opposite sides of the disc (25) when the brake is released.

1

## DISC BRAKES FOR RAIL VEHICLES

This invention relates to disc brakes for rail vehicles of the kind in which pairs of spaced rail engaging wheels are rotatable with driven axles with which they are fast, and the disc brake comprises a rotatable disc associated with one of the axles, and friction members for engagement with opposite faces of the disc in order to brake the disc and the axle with which the disc is associated.

In some known disc brakes of the kind set forth for rail vehicles the friction members are carried by the inner ends of a pair of caliper levers which are mounted in a yoke and which are separated at their outer ends to apply the brake by means of a piston and cylinder assembly. Although the loads applied to the members are substantially equalised when the brake is applied, the braking clearances between the friction members and braking surfaces on the disc may vary in a "brake-release" position. In fact one of the friction members may be in rubbing contact with the disc in the "brake-release" position, which increases wear of the friction members, and creates friction, thereby using energy.

According to our invention in a disc brake for a rail vehicle comprising a pair of friction members for engagement with opposite faces of a rotatable disc, a pair of caliper levers pivotally connected at intermediate points in their lengths to a drag-taking mounting, the inner ends of the levers straddling the peripheral edge of the disc and carrying the friction members, and a fixed actuator acting between the outer ends of the levers to separate them thereby applying the friction members to the disc, a return spring acts between the levers to hold each lever against its own actuator output member in a housing and thus maintain substantially constant braking clearances on opposite sides of the disc when the brake is released.

The return spring provides a positive retraction for both levers and prevents the friction members from contacting the disc in the "brake-release" position. This therefore prevents the generation of parasitic power inputs and excessive wear of the friction members with consequent damage to the disc and an increase in rolling resistance.

Preferably the actuator is of the double-acting type, suitably a wedge-expander which comprises a wedge displaceable in a direction generally normal to the axis of the disc in order to separate a pair of tappets at their inner ends, the tappets being guided to slide in aligned axial bores in a housing and acting at their outer ends on the levers.

The effective lengths of the tappets may be independently adjustable, either manually, or automatically, to compensate for wear of the friction members.

When the brake is installed in a bogie the housing of the actuator is mounted on an extension of a housing of a traction motor for driving the axle, and the drag on the friction members may be transmitted to the extension through drag-links coupled to the pivotal connections on the levers, or the edges of the levers themselves may engage with spaced drag-taking guide surfaces in a mounting for the levers and between which the levers are slidably guided.

One embodiment of our invention is illustrated in the accompanying drawings in which:-

Figure 1 is a plan of a schematic layout of a twin-axle driven bogie incorporating disc brake installations;

Figure 2 is a practical version, on an enlarged scale, of a portion of the layout of Figure 1;

Figure 3 is a side view of the portion of the bogie shown in Figure 2; and

Figure 4 is an end view of one of the brakes showing a modification.

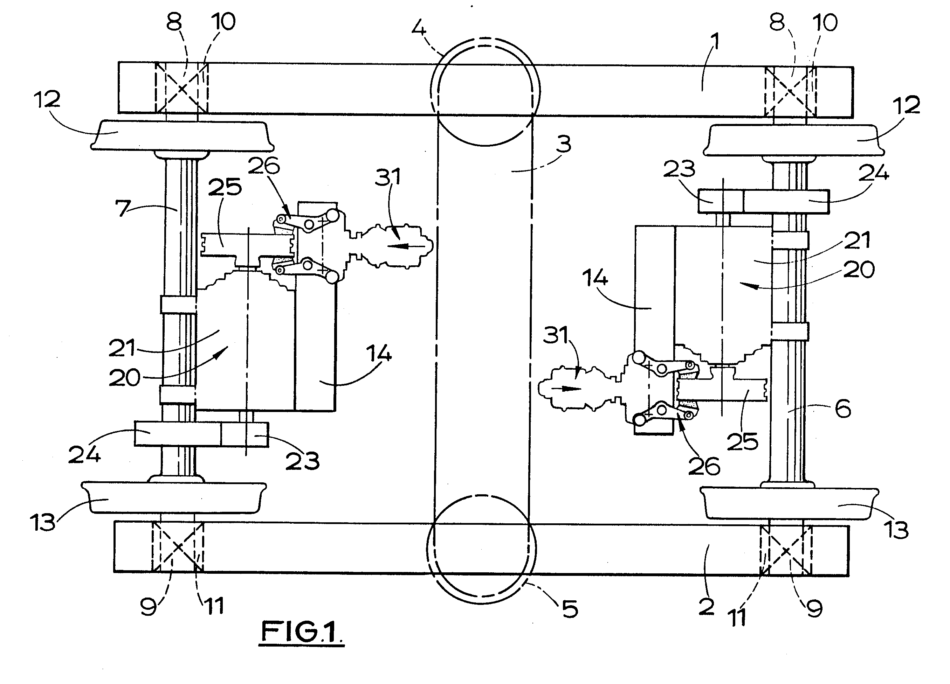

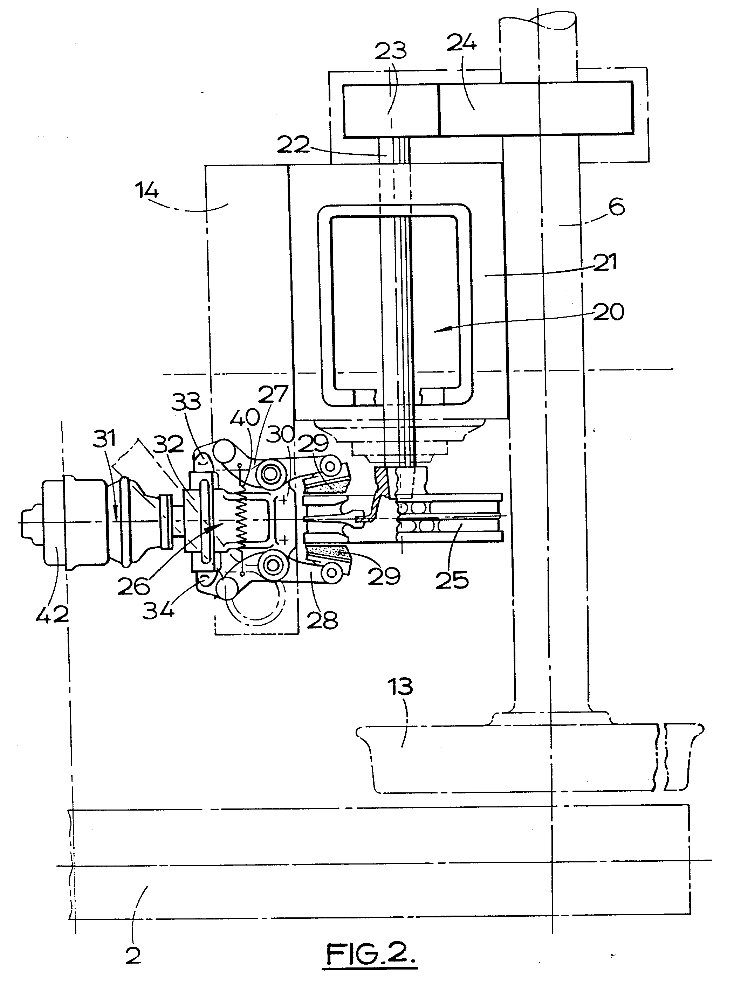

The twin-axle drivable bogie for a rail vehicle illustrated in Figures 1 to 3 of the drawings comprises side frames 1, 2 which are interconnected by a transverse bolster 3 and resilient suspension assemblies, suitably in the form of springs 4 and 5, are provided between opposite ends of the bolster 3 and the side frame 1, 2. Axles 6 and 7 are journalled for rotation at opposite ends in axle boxes 8, 9 containing bearings, and the axles boxes, in turn, are carried from the side frames 1, 2 through resilient suspension assemblies 10, 11, for example coil-springs or rubber blocks.

A pair of wheels 12, 13 inboard of each frame are fast with each axle 6, 7.

Each axle 6, 7 is driven by an electric motor 20 of which the housing 21 is carried by the respective axle 6, 7. The armature shaft 22 of each electric motor carries at opposite ends a pinion 23 in meshing

4

engagement with a gear wheel 24 fast with the adjacent axle 6, 7, and a brake disc 25 of the ventilated type.

Each disc 25 is adapted to be braked by a disc brake 26 of the caliper type. Each brake 26 comprises a pair of caliper levers 27, 28 which are pivotally connected at intermediate points in their lengths to a mounting bracket 30 on an extension 14 of the housing 21. At their inner ends the levers 27, 28 carry a pair of brake shoes 29 carrying friction linings for engagement with braking surfaces defined by opposite faces of the disc 25 and at their outer ends the levers 27, 28 are adapted to be separated by means of an actuator 31 of the double-acting type.

The actuator 31 comprises a housing 32 which is rigidly carried from the bracket 30 and of which the axis is normal to the axis of rotation of the disc 25. The actuator incorporates a wedge which is guided in the housing 32 for movement in a longitudinal direction and acts between adjacent ends of a pair of tappets 33, 34. The tappets 33, 34 are guided in aligned transverse bores in the housing 32 and act at their outer ends between the outer ends of the levers 27, 28. The effective length of each tappet 33, 34 is adjustable, either manually or automatically, to maintain, at a substantial value, the braking clearances between the shoes 29 and the disc 25.

A return spring 40, suitably a tension spring, acts between the levers 27 and 28 adjacent to their outer ends in order to urge the tappets 33, 34 inwardly to maintain the desired braking clearances in the "brake-release" position of the brakes.

The wedge, in a known manner, is displaced longitudinally to apply the brake pneumatically for service braking by means of pneumatic pressure applied to a piston working in a cylinder 42 and, for parking or emergency braking, when the pneumatic pressure is not operative, the wedge is held in an advanced, brake-applying, position by means of a compression spring which acts on the wedge through the piston.

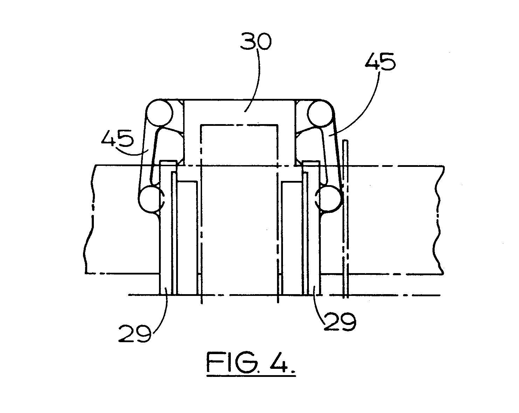

When the brakes are applied, either pneumatically or by the release of stored energy in the spring, the drag on the shoes 29 is transmitted to the extensions 14 through drag links 45 (Figure 4) which suspend from the bracket 30.

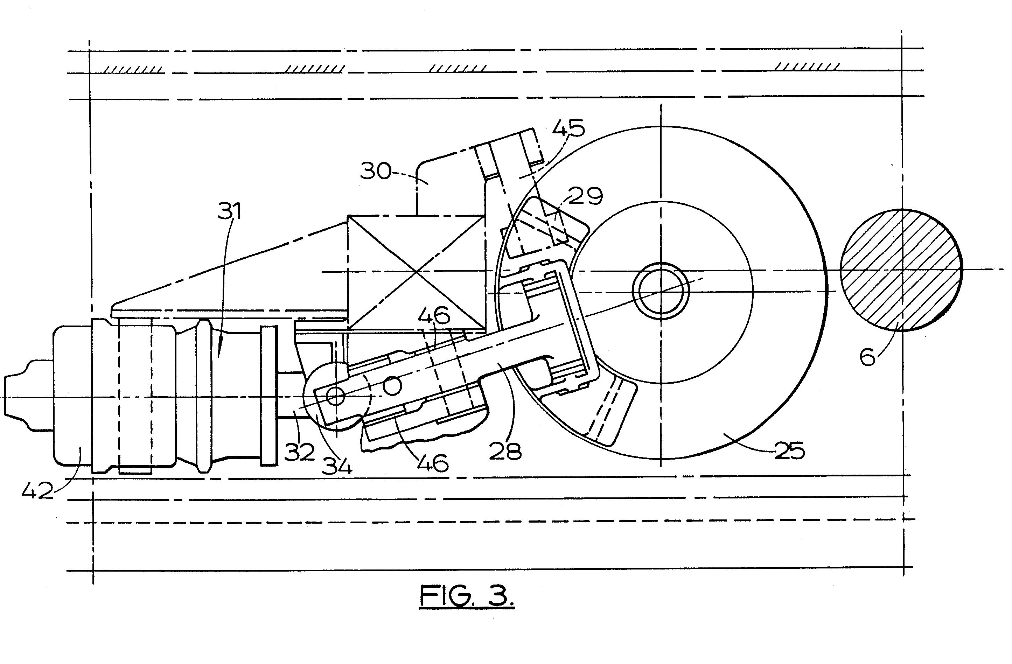

In a modification, shown in Figure 3, the drag-links 45 are omitted and the drag on the shoes 29 is taken by spaced surfaces 46 on the bracket 30 and with which the edges of the caliper levers 27 and 28 are engaged.

In the brake described above, a small amount of articulation is provided between the shoes 29 and the caliper levers 27 and 28 to permit the friction linings to be aligned with the disc 25. This feature forms the subject of our G.B. Patent No. 1 543 313. However, the friction linings will wear in a taper, so that the brake may be fitted with new linings of tapered outline which wear to a parallel sided worn outline.

In the modified construction of Figure 4 the levers 27 and 28 act on the shoes 29 through fully articulated connections, and similar connections are provided between the links 45 and the shoes. This enables the shoes to align themselves as necessary with the disc. Friction linings which are parallel sided can be fitted and will follow a parallel wear path.

6

In the construction described above the housing 31 can be orientated to any convenient angular position to facilitate installation provided the line of action of the tappets 33 and 34 remains substantially normal to the outer ends of the levers 27, 28.

CLAIMS

1. A disc brake for a rail vehicle comprising a pair of friction members (29) for engagement with opposite faces of a rotatable disc (25), a pair of caliper levers (27, 28) pivotally connected at intermediate points in their lengths to a drag-taking mounting (30), the inner ends of the levers straddling the peripheral edge of the disc and carrying the friction members, and a fixed actuator (26) acting between the outer ends of the levers to separate them thereby applying the friction members to the disc, characterised in that a return spring (40) acts between the levers (27, 28) to hold each lever against its own actuator output member in a housing (32) and thus maintain substantially constant braking clearances on opposite sides of the disc when the brake is released.

2. A disc brake according to claim 1, characterised in that the actuator is of the double-acting type.

3. A disc brake according to claim 1 or claim 2, characterised in that the actuator (26) comprises a wedge displaceable in a direction generally normal to the axis of the disc in order to separate a pair of tappets (33, 34) at their inner ends, the tappets (33, 34) being guided to slide in aligned axial bores in a housing (32) and acting at their outer ends on the levers.

4. A disc brake according to claim 3, characterised in that which the effective lengths of the tappets are independently adjustable to compensate for wear of the friction members.

5. A disc brake according to any preceding claim, characterised in that the brake is installed in a bogie and the housing (32) of the actuator is mounted on an extension (14) of a housing (21) of a traction motor (20) for driving an axle (6, 7) of the bogie.

6. A disc brake according to claim 5, characterised in that the drag on the friction members (29) is transmitted to the extension (14) through drag-links (45) coupled to the pivotal connections on the levers.

7. A disc brake as claimed in claim 5, characterised in that the drag on the friction members (29) is transmitted to the extension (14) through an engagement between the edges of the levers (27, 28) themselves and spaced drag-taking guide surfaces in a mounting (30) for the levers and between which the levers are slidably guided.

FIG.1.

1/4

0119690

0119690

2/4

FIG.2.

FIG. 4.

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-2 406 201  (COOMBES) <br> * Column  1, line 52 - column 3, line 9; figures 1,2 * | 1-3 | B 61 H    5/00 <br> B 61 H   15/00 <br> B 61 C    9/50 |
| | --- | | |
| X | DE-A-2 727 473  (INSTITUT FÜR SCHIENENFAHRZEUGE) <br> * Page  8, line 1 - page 9, line 33; figures 1,2 * | 1,3,4 | |
| | --- | | |
| X | DE-A-2 629 566  (WAGGONFABRIK UERDINGEN) <br> * Page 4, lines 1-21; figures 1,2 * | 1,5,6 | |
| | --- | | |
| A | US-A-2 911 070  (SEELIG) <br> * Column  2, line 58 - column 3, line 13; figure 6 * | 1,3 | **TECHNICAL FIELDS SEARCHED (Int. Cl. ³)** |
| | --- | | |
| D | DE-A-2 634 346  (GIRLING) | | B 61 H    5/00 <br> B 61 H   15/00 <br> B 61 C    9/48 <br> B 61 C    9/50 <br> B 61 F    5/44 <br> B 61 F    5/48 |
| | ----- | | |

The present search report has been drawn up for all claims

| Place of search THE HAGUE | Date of completion of the search 16-05-1984 | Examiner HARTEVELD C.D.H. |
|---|---|---|